Europäisches Patentamt

European Patent Office

Office européen des brevets

(11) Publication number : **0 472 293 A1**

# (12) EUROPEAN PATENT APPLICATION

(21) Application number : **91306741.9**

(22) Date of filing : **24.07.91**

(51) Int. Cl.⁵ : **F16L 9/14**

(30) Priority : **03.08.90 GB 9017103**

(43) Date of publication of application :
**26.02.92 Bulletin 92/09**

(84) Designated Contracting States :
**AT BE CH DE DK ES FR GR IT LI LU NL SE**

(71) Applicant : **Nicolaidis, Raphael**
**29 Parkside Place, Meanwood**
**Leeds, West Yorkshire, LS6 4NX (GB)**
(71) Applicant : **Hewitt, Peter Smethurst**
**16 The Vale, Collingham**
**Wetherby, West Yorkshire, LS22 5JN (GB)**

(72) Inventor : **Nicolaidis, Raphael**
**29 Parkside Place, Meanwood**
**Leeds, West Yorkshire, LS6 4NX (GB)**
Inventor : **Hewitt, Peter Smethurst**
**16 The Vale, Collingham**
**Wetherby, West Yorkshire, LS22 5JN (GB)**

(74) Representative : **Jones, Graham H.**
**Graham Jones & Company 77 Beaconsfield**
**Road Blackheath**
**London SE3 7LG (GB)**

(54) **A pipe and a process for its production.**

(57) A pipe (2) comprising an inner pipe member (4) positioned within an outer pipe member (6), the inner and outer pipe members (4, 6) being of such a relative size that there is a space (8) between the inner and outer pipe members (4, 6), and this space (8) being filled with a foamed material (10). The foamed material (10) is preferably a cementitious foamed material. The foamed material may be reinforced by a reinforcing material. A process for the production of the pipe is also disclosed.

*Fig.1.*

EP 0 472 293 A1

Jouve, 18, rue Saint-Denis, 75001 PARIS

This invention relates to a pipe and to a process for the production of the pipe.

Wide ranges of pipes are well known. The pipes are usually made from a metal, a ceramic material, concrete or a plastics material, or a mixture of these materials. If the metal is steel, then such steel pipes tend to corrode unless cathodically protected, and they can fracture. Pipes made of other metals tend to be expensive and not capable of withstanding pressures. Pipes made of ceramic materials are often porous and unable to withstand pressures. Concrete is heavy so that pipes made of concrete are usually limited in their length due to the weight of the concrete involved. Pipes made of plastics materials generally do not have the same pressure bearing capabilities as pipes made of metals and concrete, particularly where the pipes have relatively large diameters.

It is an aim of the present invention to provide a pipe which is of light weight, which is of good inherent strength, which can take pressures, and which is insulated.

Accordingly, in one non-limiting aspect of this invention there is provided a pipe comprising an inner pipe member positioned within an outer pipe member, the inner and outer pipe members being of such a relative size that there is a space between the inner and outer pipe members, and this space being filled with a foamed material.

The construction of the pipe of the present invention allows higher pressures to be accommodated within lighter gauge materials than previously, and at the same time provides the added benefit of insulation. The construction of the pipe enables the pipe to withstand pressures applied internally in the inner pipe member, and pressures applied externally on the outer pipe member.

The band of foamed material between the inner and outer pipe members provides an added strength to the inner and/or outer pipe members at a lower cost than an increase in the gauge of the original material necessary to obtain comparable pressure performance, when all costs of manufacture and installation are taken into account. Whilst the major benefits are seen to accrue in the use of plastics material for the inner and/or outer pipe members, benefits can also be seen using other materials, for example the above mentioned materials.

The pipe of the present invention may find a special use in all industries where pressure and/or volume transmission is involved. Thus, for example, the pipe may be used in the construction, process, water, petrochemical and energy industries.

Usually, the ends of the pipes will be provided with connection pieces enabling the pipes to be joined together. The connection pieces may be such that they also enable the foamed material to be held in place between the inner and outer pipe members whilst the foamed material is setting.

The foamed material is preferably a cementitious foamed material but other foamed materials may be employed if desired.

Preferably, the foamed material, for example the cementitious foamed material, is introduced into the space between the inner and outer members in a wet state and is then allowed to set.

Usually, the cementitious foamed material will be a mixture of a foaming agent, cement, water and an aggregate, dust or filler material. The precise ingredients employed for the cementitious foamed material may be varied as may be desired or appropriate.

The foamed material may be of varying densities. Where the foamed material is not a cementitious foamed material, then it may be, for example, a latex foamed material.

The space between the inner and outer parts may be varied depending upon the material from which the inner and outer pipes are made, the wall thickness of the inner and outer pipes, their diameter, and the pressures and volumes to be accommodated.

If desired, the inner and outer part members may be of the same or differing materials, and of the same or differing wall thicknesses.

The distance between the inner and outer pipe members may vary as may be desired and appropriate. Thus the band of foamed material may be of different thicknesses.

The inner and outer pipe members may be square or round cross sectional pipe members, or a combination of square or round cross sectional members. Pipes of other cross sectional shapes may also be employed.

The foamed material may be reinforced by a reinforcing material. Any suitable and appropriate type of reinforcing material may be employed. Thus, for example, the reinforcing material may be a plastics material, a rubber material or a metal. The reinforcing material may be in the form of synthetic fibres, plastics strips, a mesh or rods. The mesh or rods may be made from a plastics material or a metal.

Where the reinforcing material is not employed, then the foamed material will be chosen such that it is of good strength. Thus, the foamed material will usually be a high rigidity foamed material, and one that does not compress or does not readily compress.

The present invention also provides a process for the production of a pipe, which process comprises providing an inner pipe member in an outer pipe member such that there is a space between the inner and the outer pipe members, providing a temporary seal at one end of the inner and outer pipe members, introducing foamed material in a wet state into the space between the inner and outer pipe members at the other end of the pipe members, and allowing the foamed material to set.

The temporary seal is employed so that the wet foamed material does not escape from between the inner and outer pipe members and/or does not pass into the inner pipe member. The temporary seal is usually maintained in position until the foamed material has set sufficiently hard not to be affected by removal of the temporary seal.

The inner and outer pipe members may be placed on a first jig which holds the inner and outer pipe members in their required position.

A second jig may be employed to hold the tops of the inner and outer pipe members in position whilst the foamed material is introduced into the space between the inner and outer pipe members, and sets. During the setting period, the ends of the pipe may be totally sealed. After a suitable period of time, the pipe will be removed from the jigs and suitable connection pieces may then be attached at one or both ends of the formed pipe.

The foamed material may be introduced into the space between the inner and outer pipe members under gravity or under pressure, as may be desired.

The process of the invention may include cutting the pipe to length, and shaping the ends of the pipe to facilitate connection to a similar pipe or other type of pipe.

The process of the invention may include providing a reinforcing material in the foamed material.

The reinforcing material may be provided in the wet foamed material or, alternatively, it may be provided in the space between the inner and outer pipe members before the introduction of the wet foamed material.

In the process of the invention, the above specified materials for the pipes may be employed.

Embodiments of the invention will now be described solely by way of example and with reference to the accompanying drawings in which:

Figure 1 is a cross section through a pipe;

Figure 2 is a cross section through a pipe and shows the pipe provided with a connection piece;

Figure 3 is a top plan view of a base jig for use in the production of the pipe;

Figure 4 is a cross section of the base jig as shown in Figure 3;

Figure 5 is a top plan view of a top jig for use in the production of the pipe; and

Figure 6 is a cross section through the top jig shown in Figure 5.

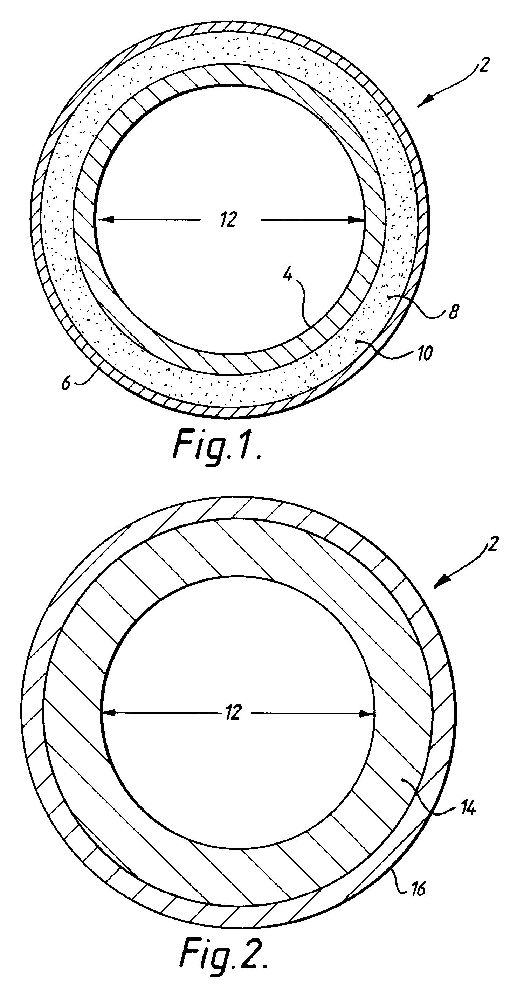

Referring to Figure 1, there is shown a pipe 2 comprising an inner pipe member 4 positioned within an outer pipe member 6. The inner and outer pipe members 4, 6 are of circular cross section as shown and they are of such a relative size that there is an annular space 8 between the inner and outer pipe members 4, 6. This space 8 is filled with foamed material in the form of cementitious foamed material 10. The foamed material 10 helps to provide added strength for the inner pipe member 4 so that the overall pipe 2 has good strength qualities. The pipe 2 has an effective internal diameter 12 which is the internal diameter of the inner pipe member 4.

Referring now to Figure 2, there is shown a sealed end 14 of the pipe 2. This sealed end 14 is provided with a connection piece 16 for enabling the pipe 2 to be connected to other similar pipes 2 or two completely different pipes 2. As will be seen, the connection piece 16 extends over the outside of the pipe 2 as shown in Figure 1. The connection piece 16 may be provided with an internal diameter which matches the internal diameter 12.

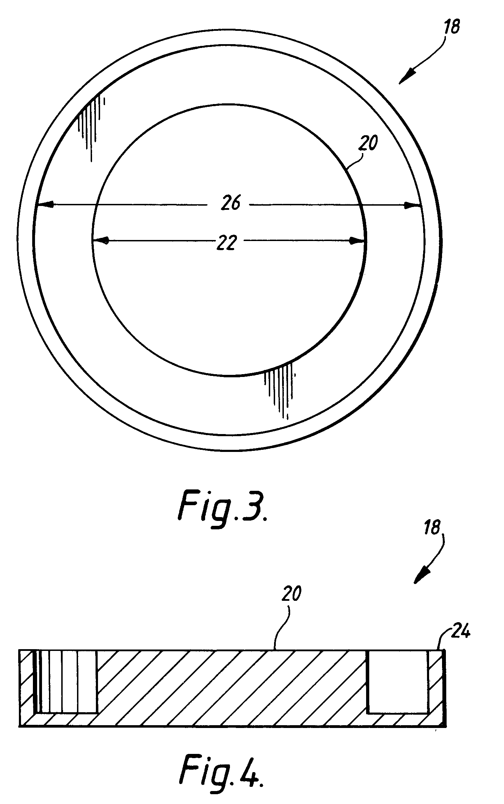

Referring to Figures 3 and 4, there is shown a base jig 18 which can be of any suitable thickness and material. The base jig 18 may thus be made of a plastics material or an anti-corrosive treated metal. The base jig 18 comprises an upstanding boss 20 which is for receiving and holding the inner pipe member 4. The boss 20 has an external diameter 22 which is approximately the same as the internal diameter 12 of the inner pipe member 4, but obviously such as to allow the inner pipe member 4 to be positioned over the boss 20. A circumferential wall 24 holds the outer pipe member 6. The wall 24 is substantially of the same internal diameter 26 as the external diameter of the outer pipe member 6. The wall 24 can be of any suitable and desired thickness.

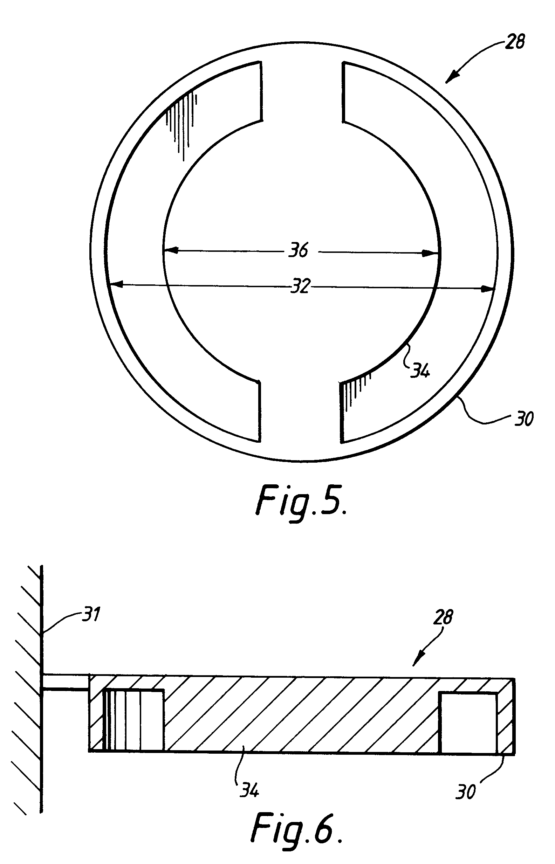

Referring now to Figures 5 and 6, there is shown a top jig 28 which can be fixed to an adjacent wall or frame 31. The top jig 28 is used to keep the inner and outer pipe members 4, 6 upright. The top jig 28 may be made of any suitable size, thickness and material. Thus, for example, the top jig 28 may be made of a plastics material or an anti-corrosive treated metal.

The top jig 28 has a skirt portion 30 which holds the outer pipe member 6. The skirt portion 30 has substantially the same internal diameter 32 as the external diameter of the outer pipe member 6. A depending boss 34 not only holds the inner pipe member 4 in position in relation to the outer pipe member 6, but also prevents formed material 10 from entering the inner pipe member 4. The space 8 between the inner and outer pipe members 4, 6 is filled with the foamed material 10 and this space may be capped during the period taken for the foamed material 10 to set.

The boss 34 has a diameter 36 which is substantially the same as the internal diameter 12 of the inner pipe member 4, in order to allow the inner pipe member 4 to be a close but comfortable fit over the boss 34. The wall 31 may have a bracket 38 for providing the connection between the top jig 28 and the wall 31.

It is to be appreciated that the embodiments of the invention described above with reference to the accompanying drawings have been given by way of example only and that modifications may be effected. Thus, for example the cementitious foamed material may be replaced by another foamed material having high rigidity and good strength properties.

## Claims

1. A pipe comprising an inner pipe member positioned within an outer pipe member, the inner and outer pipe members being of such a relative size that there is a space between the inner and outer pipe members, and this space being filled with a foamed material.

2. A pipe according to claim 1 and including a connection piece for enabling two of the pipes to be joined together,

3. A pipe according to claim 1 in which the foamed material is a cementitious foamed material.

4. A pipe according to any one of the preceding claims in which the foamed material is reinforced by a reinforcing material.

5. A pipe according to claim 4 in which the reinforcing material is a plastics material, a rubber material or a metal.

6. A process for the production of a pipe, which process comprises providing an inner pipe member in an outer pipe member such that there is a space between the inner and the outer pipe members, providing a temporary seal at one end of the inner and outer pipe members, introducing foamed material in a wet state into the space between the inner and outer pipe members at the other end of the pipe members, and allowing the foamed material to set.

7. A process according to claim 6 in which the inner and outer pipe members are placed on a first jig which holds the inner and outer pipe members in their required position, and in which a second jig is employed to hold the tops of the inner and outer pipe members in position whilst the foamed material is introduced into the space between the inner and outer pipe members, and sets.

8. A process according to claim 6 or 7 in which the foamed material is introduced into the space between the inner and outer pipe members under one of gravity and pressure.

9. A process according to claim 6 and including cutting the pipe to length, and shaping the ends of the pipe to facilitate connection to another pipe.

10. A process according to claim 6 and including providing a reinforcing material in the foamed material.

Fig.1.

Fig.2.

Fig.3.

Fig.4.

Fig.5.

Fig.6.

**European Patent Office**

## EUROPEAN SEARCH REPORT

Application Number

EP 91 30 6741

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 189 671 (CONOCO) <br> * page 5,line 6 - page 6, line 15; figure 2; claims 1,10-12 * <br> --- | 1,2 | F 16 L 9/14 |
| A | EP-A-0 198 671 <br> --- | 3-6,8 | |
| A | DE-A-2 535 885 (WEST) <br> * claims 1,15,16; figure * <br> --- | 1,2,6 | |
| A | DE-A-2 611 848 (WAVIN) <br> * claim 1 * <br> --- | 1 | |
| A | EP-A-0 246 479 (POTT) <br> ----- | | |
| | | | TECHNICAL FIELDS SEARCHED (Int. Cl.5) <br><br> F 16 L |

The present search report has been drawn up for all claims

| Place of search | Date of completion of the search | Examiner |
|---|---|---|
| BERLIN | 25-11-1991 | SCHAEFFLER C.A.A. |